# EUROPÄISCHE PATENTSCHRIFT

(11) **EP 0 700 977 B1**
(45) Veröffentlichungstag und Bekanntmachung des Hinweises auf die Patenterteilung: **13.01.1999**
(21) Anmeldenummer: 94113729.1
(22) Anmeldetag: 02.09.1994
(51) Int. Cl.: C09D 11/02

(54) **Heissschmelz-Druckfarbe**
Hot-melt printing ink
Encre d'impression thermofusible

(43) Veröffentlichungstag der Anmeldung: 13.03.1996
(73) Patentinhaber: Siegwerk Druckfarben GmbH & Co. KG, 53721 Siegburg (DE)
(72) Erfinder: Griebel, Rudolf, Dr., D-53721 Siegburg (DE); Kocherscheid, Karl A., Dr., D-53773 Hennef (DE); Stammen, Klaus, Dr., D-53797 Lohmar (DE)
(74) Vertreter: Godemeyer, Thomas, Dr.

(56) Entgegenhaltungen:
- EP-A- 0 105 994
- DE-A- 4 205 713
- GB-A- 2 085 459

## Beschreibung

Die Erfindung betrifft Druckfarben, insbesondere Druckfarben für Rotationsdruckverfahren, die in durch Schmelzen fluidisiertem Zustand verdruckbar und durch Wärmeentzug erhärtbar sind und die ein Bindemittel bestehend aus zumindest zwei Komponentengruppen mit jeweils zumindest einem Mitglied umfassen, in welchem die Mitglieder der ersten Komponentengruppe kristalline Stoffe sind, die Mitglieder der ersten Komponentengruppe Lösungsmittelcharakter für die Mitglieder der zweiten Komponentengruppe haben, die Mitglieder der zweiten Komponentengruppe bei Umgebungstemperatur in festem Zustand vorliegende amorphe Stoffe sind, die in der erschmolzenen ersten Komponentengruppe löslich sind, die Mitglieder der zweiten Komponentengruppe bei Wärmezufuhr bei einer Temperatur oberhalb des Schmelzpunktes der Mitglieder der ersten Komponentengruppe sich in diesen lösen, und die Mitglieder der ersten Komponentengruppe in feste Lösung in den Mitgliedern der zweiten Komponentengruppe übergehen, wenn die Mitglieder der zweiten Komponentengruppe bei Wärmeentzug aus der erschmolzenen Lösung der Mitglieder der ersten und zweiten Komponentengruppe ausfallen.

Unter dem Begriff Druckfarbe werden hierbei sowohl verdruckbare Körper mit tatsächlicher Farbwirkung als auch verdruckbare nicht-farbige Klarlacke und nicht-farbgebende Druckfarbenverschnitte verstanden.

Bei herkömmlichen Druckverfahren werden Lösemittel enthaltende Druckfarben von im gewünschten Druckbild präformierten Druckzylindern einer Druckmaschine auf den zwischen diesen Druckzylindern und zugeordneten Presseuren durchlaufenden Bedruckstoff übertragen und anschließend das Lösemittel der Druckfarben in einer Trocknungssektion der Druckmaschine aus dem Bedruckstoff und der auf diesem aufliegenden oder diesen teilweise penetrierenden Farbschicht ausgetrieben.

Unter dem Begriff Lösemittel sind hierbei sowohl die in der Drucktechnik üblichen organischen Lösemittel unter Einschluß von pflanzlichen und mineralischen Ölen als auch wasserbasierte Lösemittelsysteme von sogenannten wasserverdünnbaren Druckfarben unter Einschluß von Wasser zu verstehen.

Diese in der Druckindustrie, insbesondere im Falle von Rotationsdruckverfahren mit hoher Produktivität und in größtem Maßstab ausgeübte Verfahrensweise erfordert neben der Bewältigung des eigentlichen Produktionszieles - Erzeugung des Druckbildes auf dem Bedruckstoff - hohen anlagentechnischen Aufwand und enormen Energieeinsatz
- um den hohen physikalisch konvektiven Trocknungsprozeß in der durch die Produktionsgeschwindigkeit auf Rotationsdruckmaschinen bedingten extrem kurzen Laufzeit der Druckbahn zwischen den Druckwerken sicher zu bewältigen,
- um die durch Trocknung aus dem Druckerzeugnis entfernten Lösemittel durch Rückgewinnung weitestgehend verlustfrei oder durch eine Nachverbrennung unter Totalverlust aus dem Prozeß zu ziehen, ohne die Umwelt in unzulässigem Maße zu belasten,
- um die arbeitshygienischen Richtlinien und die Verordnungen hinsichtlich der für die verwendeten Lösemittel geltenden "maximalen Arbeitsplatzkonzentrationen" (MAK-Werte) in den den Druckwerken unmittelbar angrenzenden Verkehrsräumen einzuhalten,
- um sicherheitstechnische Auflagen, z. B. hinsichtlich des Feuer- und Explosionsschutzes in den Druckmaschinen und deren Peripherie aber auch in allen lösemittelexponierten Einrichtungen der Gesamtanlage zu erfüllen.

Im Vergleich zu diesen notwendigen peripheren technischen Einrichtungen sind die für die unmittelbare Erzeugung des Druckbildes auf dem Bedruckstoff erforderlichen Anlagenteile - speziell im Falle der Massenverfahren - nämlich Tief- und Rollenoffsetdruck - in ihren räumlichen Abmessungen insgesamt klein. Gleiches gilt für die Investitionskosten und die laufenden Betriebskosten der Druckmaschine im eigentlichen Sinne im Vergleich zu den Kosten, die für die Beschaffung und den Betrieb der für die Lösemitteltechnologie unabdingbaren Anlagenteile aufzuwenden sind.

Die genannten, durch die Lösemitteltechnologie der Druckfarben im Druckprozeß bedingten Nachteile können im Prinzip durch die Verwendung von lösemittelfreien schmelzbaren Heißdruckfarben in Druckmaschinen mit heizbaren Druckwerken vermieden werden. Hierbei werden die Druckfarben in schmelzflüssigem Zustand verdruckt und durch Wärmeentzug verfestigt.

Die DE-OS 25 34 845 beschreibt Druckfarben aus thermoplastischen Polymeren für die Anwendung in Druckmaschinen und für Druckverfahren der vorstehend genannten Art, die jedoch wegen zu hoher Viskosität und zu hoher Klebrigkeit ("Tack") nicht brauchbar bzw. nicht praxisgerecht sind. Prinzipiell zeigt sich nämlich, daß die Erwärmung von thermoplastischen Polymeren oder Gemischen solcher Körper bis auf Temperaturen, die weit über den thermoplastischen Erweichungspunkt hinausgehen und bis an die Zersetzungstemperaturen dieser Thermoplaste heranreichen, eine lediglich zähflüssige Masse von hoher Klebrigkeit ("Tack") ergibt, die insbesondere viskositätsbedingt drucktechnisch völlig ungeeignet ist. Gleiches gilt für thermoplastische Harze und Gemische, die mit dem anwendungstechnischen Begriff "Hotmelts" benannt werden.

Aus der GB-A-2 085 459 ist eine schmelzbare Druckfarbe bekannt, die für den Dekordruck auf Glas- und Keramikwaren bestimmt ist. Die Druckfarbe wird hierbei als Druckbild zunächst auf einen stempelartigen elastomeren oder oberflächensilikonisierten Zwischenträger aufgebracht und von dort auf die Glas- oder Keramikware übertragen. Hierfür wird eine permanente drucksensitive Klebrigkeit unterhalb des Schmelz- bzw. Erweichungspunktes eingestellt, die sogar während der Erzeugung eines Mehrfarbenbildes auf dem Zwischenträger andauern soll. Dies wird durch einen Anteil von bis zu 20 Gew.% z. B. eines Holzharzes (Kolophonium) oder eines Kolophoniumesters als Klebrigmacher (tackifier), insbesondere des Glycerols oder des Pentaerythrits sichergestellt. In einem Ausführungsbeispiel wird Stearylalkohol mit einem Anteil von < 5 % angegeben. Hierbei wird eine Viskosität von 50 - 1000 Poise und auch ein plastisches Fließverhalten mit einer Fließgrenze gefordert. Eine schmelzbare Druckfarbe mit der hiermit geforderten und bereitgestellten Eigenschaft einer verzögerten Erhärtung ist für den schnelllaufenden Rotationsdruck, bei dem der Bedruckstoff nach dem Übertragen des Druckbildes mit hoher Geschwindigkeit über Leitspindeln und Wendestangen der Druckmaschine läuft, ungeeignet. In der DE 42 05 713 C2 ist eine über den vorgenannten Kenntnisstand hinausgehende Lehre angegeben, deren Prinzip zur Erzielung einer drucktechnisch geeigneten Heißdruckfarbe mit insbesondere drucktauglicher und ganz besonders tiefdrucktauglicher Viskosität darin besteht, ein drucktechnisch geeignetes Farbbindemittel aus mindestens zwei Komponentengruppen bereitzustellen, in dem die Komponenten der ersten Gruppe bei Raumtemperatur kristalline Stoffe mit oberhalb der typischen Gebrauchstemperaturen von Druckerzeugnissen liegenden Schmelzpunkten sind, die Lösungsmittelcharakter für die Mitglieder einer zweiten Komponentengruppe haben, und die Komponenten der zweiten Gruppe bei Raumtemperatur amorphe feste thermoplastische Gläser sind, die in der erschmolzenen ersten Komponentengruppe löslich sind und sich als Bindekörper für Druckfarben eignen. Wird ein solches Stoffgemisch über den scharf definierten Schmelzpunkt der kristallinen Komponenten der ersten Komponentengruppe hinaus erhitzt, so lösen sich bei geeigneter Komponentenwahl beider Gruppen die zweiten Komponenten in den geschmolzenen ersten Komponenten zu einer fluiden Druckfarbe mit einer insbesondere für den Tiefdruck geeigneten niedrigen Viskosität, die ausschließlich durch die Anwesenheit der geschmolzenen als Lösemittel für die Mitglieder der zweiten Komponentengruppe wirkenden Mitglieder der ersten Komponentengruppe erreicht werden kann. Hiermit wird eine geeignete tiefdrucktaugliche Heißdruckfarbe bereitgestellt, die innerhalb eines geringen, klar oberhalb der typischen Gebrauchstemperaturen von Druckerzeugnissen liegenden Temperaturintervalls durch Wärmezufuhr zu verflüssigen und durch Wärmeentzug zu verfestigen ist.

Zur Verwirklichung des genannten Prinzips zur Bereitstellung drucktechnisch tauglicher, insbesondere tiefdruckgeeigneter Heißdruckfarben sind in der DE 42 05 713 C2 beispielhaft als geeignete Komponenten für die erste Komponentengruppe Cetylalkohol, Stearylalkohol und 12-Hydroxy-Stearinsäure sowie als Komponente der zweiten Komponentengruppe ein hydroxylgruppenreiches thermoplastisches Polyacrylat offenbart.

Es ist weiterhin vorgeschlagen worden, eine dritte Komponentengruppe beizumischen, deren Mitglieder Farbstoffe und/oder Pigmente und somit zuständig für eine eventuell beabsichtigte Farbwirkung der Druckfarbe sind und/oder auch Additive darstellen, mit denen drucktechnische oder anwendungstechnische Eigenschaftsprofile der Heißdruckfarben oder der damit gedruckten Produkte beeinflußt werden.

Werden Heißdruckfarben durch Erschmelzen dieser Komponenten mit den in der DE 42 05 713 C2 genannten Mischungsverhältnissen und Temperaturen bereitgestellt und auf Tiefdruckmaschinen unter Verwendung von in praxisüblicher Weise hartglanzverchromten und beheizten Druckzylindern verdruckt, so stellt man bei Ausübung der üblichen Taucheinfärbung und Rakelung dieser Druckzylinder bei höheren Druckgeschwindigkeiten Benetzungsdefizite fest. Dadurch ergibt sich eine ungleichmäßige, nicht lückenlos flächendeckende Einfärbung der Oberflächen dieser hartglanzverchromten Druckzylinder und somit ein ungleichmäßiges, unter Umständen sogar lückenhaftes Druckbild.

Werden ferner Heißdruckfarben mit den genannten Komponenten und in den genannten Mischungsverhältnissen zum Drucken bei niederen und mittleren Druckgeschwindigkeiten eingesetzt, so sind diese für die Augen des Fachmannes in ihrer Qualität voll zufriedenstellend, sofern auf Papier und Karton gedruckt wird, weisen jedoch eine ungenügende Haftung bzw. Verankerung auf dem Bedruckstoff auf, wenn auf nicht-vorlackierte Metallfolien oder metallisierte Folien, die beide im Verpackungsdruck von Bedeutung sind, gedruckt wird.

Hieraus ergibt sich die der Erfindung zugrundeliegende Aufgabe, Heißdruckfarben der eingangs genannten Art bereitzustellen, die ein verbessertes zufriedenstellendes Benetzungsverhalten und ein gesteigertes genügendes Haftvermögen gegenüber metallischen Oberflächen, insbesondere Hartchromoberflächen und Aluminiumfolien aufweisen.

Eine Lösung hierfür besteht darin, daß zumindest einer aus der folgenden Gruppe von Stoffen
- kristalline, bifunktionelle Alkohole mit geeignetem Schmelzpunkt, deren chemische Natur für den Fachmann durch die Nennung von 1,6-Hexandiol als typischem Vertreter dieser Stoffklasse verdeutlicht ist (Schmelzpunkt (M.P.) technisch 40 - 42° C); dabei ist 12-Hydroxystearinsäure ausgenommen, wenn hydroxylgruppenreiches Polyacrylat enthalten ist.
- Fettsäuremonoester mehrfunktioneller Alkohole wie z. B. Glycerinmonostearat, das unter den Handelsnamen Edenor GMS als Handelsprodukt der Henkel KGaA (M.P. technisch 59° C) zu beziehen ist,
als Komponente der ersten Komponentengruppe vorgesehen wird. Die Verwendung der hiermit genannten Stoffe als Mitglieder der ersten Komponentengruppe jeweils allein oder in Kombination miteinander oder in Kombination mit den bereits bekannten Stoffen der ersten Komponentengruppe Cetylalkohol, Stearylalkohol oder 12-Hydroxy-Stearinsäure verbessert die Benetzungsfähigkeit und die Haftfähigkeit auf metallischen Oberflächen. Diese Wirkung tritt auch bei Verwendung des bekannten Polyacrylat als Mitglied der zweiten Komponentengruppe ein.

Eine weitere Lösung der erfindungsgemäßen Aufgabe besteht darin, daß zumindest einer aus der folgenden Gruppe von Stoffen als Komponente der zweiten Komponentengruppe vorgesehen wird:
- nicht vernetzende Poly(meth)acrylat-[P(M)A]Copolymerisate, z.B. Polyacrylsäure-n-Butylester, die unter dem Handelsnamen Acronal^{R} 4F oder in Variation unter dem Handelsnamen Acronal^{R}A 150F von der BASF AG zu beziehen sind, oder z. B. n-Butylmethacrylat-Copolymere, die unter den Handelsnamen Degalan^{R}LP AL 23 bzw. LP AL 25 von Degussa erhältlich sind, oder z. B. ein i-Butylmethacrylat-Copolymer, -Copolymer, das unter dem Handelsnamen Degalan^{R}LP 70/01 ebenfalls von Degussa bezogen werden kann; weiterhin z. B. das Handelsprodukt Jagotex^{R} AP 273 der Ernst Jäger GmbH und/oder das Handelsprodukt Paraloid^{R} B-44 der Rohm und Haas Deutschland GmbH (letzteres Produkt ist zähflüssig mit einer Viskosität von ca. 1.500 mPa s bei Raumtemperatur und wird vorzugsweise als Nebenkomponente mit relativ geringem Gewichtsanteil in der zweiten Komponentengruppe eingesetzt);
- thermoplastische Polyamide, z. B. das Handelsprodukt Vestamelt 640^{R} der Hüls AG und/oder z. B. Reammide^{R} PAS 6 AP bzw. PAS 5059 der Chemplast SPA Mailand und/oder Euremelt^{R} 930 bzw. 2096 der Schering AG;
- thermoplastische Polyester-Polyamid-Copolymere, z. B. das Handelsprodukt Vestamelt^{R} 4380 der Hüls AG;
- thermoplastische Kolophoniumester, z. B. das Handelsprodukt Filtrez^{R} 895 der Akzo Coatings Inc.;
- lösliche Polystyrole, z.B. die Handelsprodukte Kristalex^{R} F85 und/oder F100, Piccotex^{R} 75 und/oder 100, Piccolastic^{R} A75, sämtliche Produkte der Hercules BV, wobei Kolophoniumester ausgeschlossen ist, wenn Stearylalkohol eingesetzt wird.

Auch hier können die bezeichneten Stoffe für die zweite Komponente jeweils alleine oder in Kombination miteinander oder in Kombination mit dem bereits bekannten hydroxylgruppenreichen thermoplastischen Polyacrylat zur Anwendung kommen. Auch hier zeigt sich ein deutlich verbessertes Ergebnis hinsichtlich der Benetzbarkeit bzw. der Haftfähigkeit an metallischen Oberflächen.

Es versteht sich, daß der zweitgenannte Lösungsansatz auch in Kombination mit dem erstgenannten zur Anwendung kommen kann, d. h. daß sowohl einer der erfindungsgemäßen Stoffe der zweiten Komponentengruppe als auch zumindest einer der erfindungsgemäßen Stoffe der ersten Komponentengruppe für die erfindungsgemäße Druckfarbe ausgewählt wird. Kommt eine solche Kombination nicht zur Anwendung, sind als Vertreter der ersten Komponentengruppe wie bekannt Cetylalkohol (Schmelzpunkt (M.P.) technisch 49° C) aber auch 1-Octadecanol (M.P. technisch 56° C) und/oder 1-Eicosanol (M.P. technisch 63° C) und/oder 1-Docosanol (M.P. technisch 69° C) geeignet (Handelsprodukte Nacol 16 bzw. 18 bzw. 20 bzw. 22 der CONDEA Chemie GmbH), die den ersteren teilweise oder vollständig ersetzen können.

Eine weitere Lösung besteht darin, daß zumindest einer aus der folgenden Gruppe von Stoffen
- 2,4,7,9,-Tetramethyl-5-decin-4,7-Diol (M.P. technisch ca. 37° C), erhältlich unter dem Handelsnamen Surfynol^{R} 104 der Air Products and Chemicals Inc.;
- Butin-2-Diol 1,4 (M.P. technisch 55 - 58° C), erhältlich als Zwischenprodukt der BASF AG;
als additive Komponente einer dritten Komponentengruppe vorgesehen wird, die bei Wärmeentzug mit den Mitgliedern der ersten und zweiten Komponentengruppe ebenfalls die beschriebene neue Phase bildet, nämlich in feste Lösung mit diesen geht.

Der Einsatz dieser zusätzlichen dritten Komponenten kann bei den bereits bekannten Mitgliedern der ersten und zweiten Komponentengruppen ebenso wie bei den hiermit erstmals beanspruchten Mitgliedern der ersten und zweiten Komponentengruppen zur Anwendung kommen.

Die Mitglieder der ersten und der dritten Komponentengruppen sind in der Regel bei Umgebungstemperatur in fester Phase vorliegende Stoffe. Die Mitglieder dieser Komponentengruppen können jedoch hiernach für sich alleine bei Umgebungstemperatur auch flüssig oder zähflüssig sein oder einen Schmelzpunkt haben, der unterhalb der Gebrauchstemperatur von Druckerzeugnissen liegt, wenn diese Komponenten in den Stoffen der zweiten Komponentengruppe in fester Lösung bei Temperaturen, die oberhalb der üblicherweise zu erwartenden Gebrauchstemperaturen von Druckerzeugnissen liegen, zu binden sind.

Als besonderer und überraschender Vorteil der erfindungsgemäßen Druckfarben hat sich ergeben, daß die erfindungsgemäßen Druckfarben sich durch besonders günstige "Deinkbarkeit" auszeichnen. Hierunter versteht die Fachwelt die Eigenschaft von auf Papier gedruckten Druckfarben oder allgemeinen Papiereinfärbungen, unter den Umständen der dem Papierrecycling vorgeschalteten Deinking-Verfahren von den Papierfasern entfernbar zu sein. Diese heute von jedem auf Papier oder Karton gedruckten Druckerzeugnisse zu erfüllende Forderung wird von den erfindungsgemäßen Druckfarben in günstiger Weise gleichfalls erfüllt.

Bevorzugte und geeignete Rezepturen von erfindungsgemäßen Heißdruckfarben mit verbesserter Benetzung von Hartchromdruckzylindern und verbesserter Haftung auf metallischen Bedruckstoffen, insbesondere auf nicht-vorlackierten Aluminiumfolien werden nachstehend angegeben.

In den nachstehenden Beispielen sind jeweils die zur ersten Komponentengruppe gehörenden Komponenten mit K1, die zur zweiten Komponentengruppe gehörigen Komponenten mit K2 und Komponenten einer dritten Komponentengruppe mit K3 bezeichnet.

| Beispiel 1: | |
|---|---|
| Kristalex^{R} F 100 | 45 g K2 |
| Acronal^{R} 4F | 10 g K2 |
| Nacol^{R} 18 | 40 g K1 |
| 12-Hydroxy-Stearinsäure | 5 g K1 |

| Beispiel 2 : | |
|---|---|
| Kristalex^{R} F 100 | 30 g K2 |
| Degalan^{R} LP 70/01 | 20 g K2 |
| Degalan^{R} LP AL 23 | 8 g K2 |
| Nacol^{R} 20 | 42 g K1 |

| Beispiel 3 : | |
|---|---|
| Piccotex^{R} 100 | 45 g K2 |
| Nacol^{R} 18 | 48.5 g K1 |
| 1,6-Hexandiol | 5.0 g K1 |
| Surfynol^{R} 104 | 1,5 g K3 |

| Beispiel 4 : | |
|---|---|
| Vestamelt^{R} 640 | 40 g K2 |
| Vestamelt^{R} 4380 | 10 g K2 |
| Edenor^{R} GMS | 50 g K1 |

Eine besonders gute Deinkbarkeit der erfindungsgemäßen Druckfarben kann durch die zusätzliche Verwendung eines 4-Nonylphenol-Polyglykolethers erzielt werden, der unter dem Handelsnamen Arkopal^{R} N-230 der Hoechst AG erhältlich ist und ca. 23 Ethylenoxid-Einheiten in der Polyglykoletherkette aufweist. Nachstehend werden Beispiele von Rezepturen für besonders gut deinkbare Heißdruckfarben angegeben:

| Beispiel 5 : | |
|---|---|
| Vestamelt^{R} 640 | 40 g K2 |
| Vestamelt^{R} 4380 | 10 g K2 |
| Edenor^{R} GMS | 49 g K1 |
| Arkopal^{R} N-230 | 1 g K3 |

| Beispiel 6 : | |
|---|---|
| Vestamelt^{R} 640 | 30 g K2 |
| Piccolastic^{R} A75 | 20 g K2 |
| Edenor^{R} GMS | 45 g K1 |
| 1,6-Hexandiol | 5 g K1 |

Mit der DE 42 05 713 C2 war unter anderem vorgeschlagen worden, die Heißdruckfarben in Form von Wickelfolien an die Druckmaschine anliefern zu können. Die Druckpraxis ergibt, daß ein solches Verfahren insbesondere zur Verwirklichung eines Proof-Verfahrens vorteilhaft ist.

Heißdruckfarben, die die gewünschte Elastizität und mechanische Zugfestigkeit zur Verwendung in Form von gezogenen, gegossenen oder extrudierten Folien aufweisen, können durch die Verwendung eines geeigneten Poly(meth)acrylat-[P(M)A]-Copolymerisates formuliert werden, das unter dem Handelsnamen Jagotex AP 578 der Ernst Jäger GmbH & Co. oHG zu beziehen ist.

Mit dazu synergistischer Wirkung können zusätzlich Weichmacher für Acrylatsysteme eingesetzt werden. Geeignet sind handelsübliche Polyester aus Adipinsäure und Butandiol, insbesondere Palamoll 654 der BASF AG.

Heißdruckfarben mit besonderer Eignung für die Form von mechanisch beanspruchbaren Folien lassen sich durch folgende Rezepturbeispiele herstellen:

| Beispiel 7 : | |
|---|---|
| Jagotex^{R} AP 578 | 45 g K2 |
| Acronal^{R} 150 F | 15 g K2 |
| Edenor^{R} GMS | 35 g K1 |
| 12-Hydroxy-Stearinsäure | 5 g K1 |

| Beispiel 8 : | |
|---|---|
| Jagotex^{R} AP 578 | 50 g K2 |
| Acronal^{R} 150 F | 15 g K2 |
| Edenor^{R} GMS | 28 g K1 |
| 12-Hydroxy-Stearinsäure | 5 g K1 |
| Palamoll^{R} 654 | 2 g K3 |

Die Herstellung von erfindungsgemäßen Heißdruckfarben erfolgt durch Erhitzen des Gesamtgemenges der Rezepturkomponenten über den höchsten Schmelzpunkt der ersten Komponentengruppe hinaus und weiter bis über die höchste Lösetemperatur der Bindemittelkomponenten der zweiten Komponentengruppen in der Schmelze der ersten Bindemittelkomponenten. Diese Lösetemperatur beträgt typischerweise bei den als Beispielen angegebenen Gemischen ca. 100 bis 110° C.

Falls beabsichtigt ist, eine Druckfarbe mit Buntwirkung - einschließlich schwarz - herzustellen, wird mindestens eine farbgebende Komponente in löslicher Form als Farbstoff und/oder in unlöslicher Form als Farbpigment zugegeben.

Die Schmelzlösung aus ersten und zweiten ggfs. auch aus dritten Komponenten wird dann mit den üblichen Methoden homogenisiert bzw. dispergiert.

Beim Herstellen der Heißdruckfarben wird das geschmolzene homogene System bzw. die Schmelzdispersion vor dem Erstarren in Formen gegossen oder wahlweise als dünne Folie in einer für die Druckmaschinen normbreiten geeigneten Breite extrudiert bzw. gegossen. Die Gußkörper aus dem Formenguß können eine mögliche Lieferform darstellen, mechanische Bruckstückelungen oder Pulverformen wahlweise andere Lieferformen.

Die wahlweise gefertigten Folien werden auf Rolle gewickelt und in dieser Form zur Weiterverwendung an die Druckmaschine beim Verarbeiter geliefert.

Die gattungsgemäßen Heißdruckfarben zeichnen sich dadurch aus, daß sich die thermoplastischen Bindemittel der zweiten Komponentengruppe bei geringfügiger Temperaturerniedrigung unter die Lösetemperatur aus der Schmelze der ersten Komponentengruppe absondern und während dieses Prozesses die Komponenten der ersten und ggfs. auch die Komponenten der dritten Gruppe als sogenannte feste Lösung binden.

Diese gattungsgemäße Eigenschaft, durch die im Abkühlungsprozeß bereits weit über der Schmelztemperatur der Komponenten der ersten Komponentengruppe eine neue feste Phase entsteht, erlaubt es auch, für die erste und auch die dritte Komponentengruppe Komponenten bzw. Additive auszuwählen, die für sich alleine bei Umgebungstemperatur flüssig bzw. zähflüssig sind oder einen Schmelzpunkt haben, der unterhalb der üblicherweise zu erwartenden Gebrauchstemperatur von Druckerzeugnissen liegt. Die durch Wärmeentzug bzw. Abkühlung der Schmelzlösungen entstehenden festen Lösungen sind amorph und haben typischerweise und insbesondere im Falle der hier angegebenen Beispiele Wiederverflüssigungstemperaturen von ca. 70° C bis 100° C. Diese Temperaturen ermöglichen es, Druckerzeugnisse während der Produktion aber auch bei Exposition gegenüber extremen Temperaturen, die im Normalgebrauch dieser Produkte selten auftreten, sicher zu handhaben, ohne ein Klebrigwerden der Druckfarben befürchten zu müssen.

Die genannten relativ hoch liegenden Verfestigungstemperaturen der als feste Lösungen erstarrenden gattungsgemäßen Heißdruckfarben bewirken im Zusammenhang mit dem den dünnen Druckschichten eigenen geringen Wärmeinhalt eine extrem rasche Verfestigung der gedruckten Farbe auf der laufenden Bedruckstoffbahn in Rotationsdruckmaschinen bzw. auf den Bögen einer Bogendruckmaschine.

Da die thermische Masse der in einer Zeiteinheit bedruckten Bedruckstoffläche groß ist gegenüber der thermischen Masse der in dieser Zeiteinheit auf den Bedruckstoff übertragenen Heißdruckfarbe und da die Kontaktzeit zwischen Bedruckstoff und beheiztem Druckzylinder kurz ist, kommt es zwischen Druckzylinder und der laufenden Bedruckstoffbahn nicht zu einem Temperaturausgleich. Der Bedruckstoff wirkt somit als hohe Kühlkapazität auf die soeben übertragene Druckfarbe und trägt zu deren rascher und unmittelbarer Verfestigung bei. Der Bedruckstoff selbst wird zum anderen beim Vorbeilaufen am Druckzylinder kaum erwärmt.

Dies steht in technisch besonders vorteilhaftem Gegensatz zu den mit lösemittelenthaltenden Druckfarben ausgeübten Druckverfahren, insbesondere dem Tief- und Flexodruck, bei denen die Trocknung durch erhitzte Prallstrahlen unter erheblicher Erwärmung der durchlaufenden Bedruckstoffbahn erfolgt, deren Temperatur ohne weiteres auf 80°C steigen kann. Diese Erwärmung bedingt Dimensionsänderungen der laufenden Bedruckstoffbahn, die im Falle von Kunststoffolien durch deren Temperatur-Dehn-Charakteristik begründet ist, im Falle von Papier durch dessen Feuchtigkeitsverlust, verursacht wird. Diese deutlichen Veränderungen der Quer- und Längsdimensionen der zu bedruckenden Bedruckstoffbahn machen bei der praxisüblichen Hintereinanderschaltung von mehreren Druckwerken im Mehrfarbendruck komplexe Register- und Passersteuerungen notwendig. Im Falle von Papierbahnen sind zusätzlich aufwendige Rückbefeuchtungen durch Bedampfen erforderlich, damit diese Dimensionsänderungen zurückgeführt und andere Druckprozeßstörungen, die durch Feuchteverlust des Papiers bedingt sind, ausgeschaltet werden können.

Bei Verwendung von Heißdruckfarben ergeben sich solche Dimensionsänderungen der Bedruckstoffbahn und Feuchteverluste des Papiers aus den oben angegebenen Gründen nicht; in der kurzen Kontaktzeit kann sich kein Temperaturgleichgewicht zwischen Druckzylinder und vorbeilaufender Bedruckstoffbahn etablieren. Die Register- und Passersteuerungen können insofern erheblich vereinfacht werden.

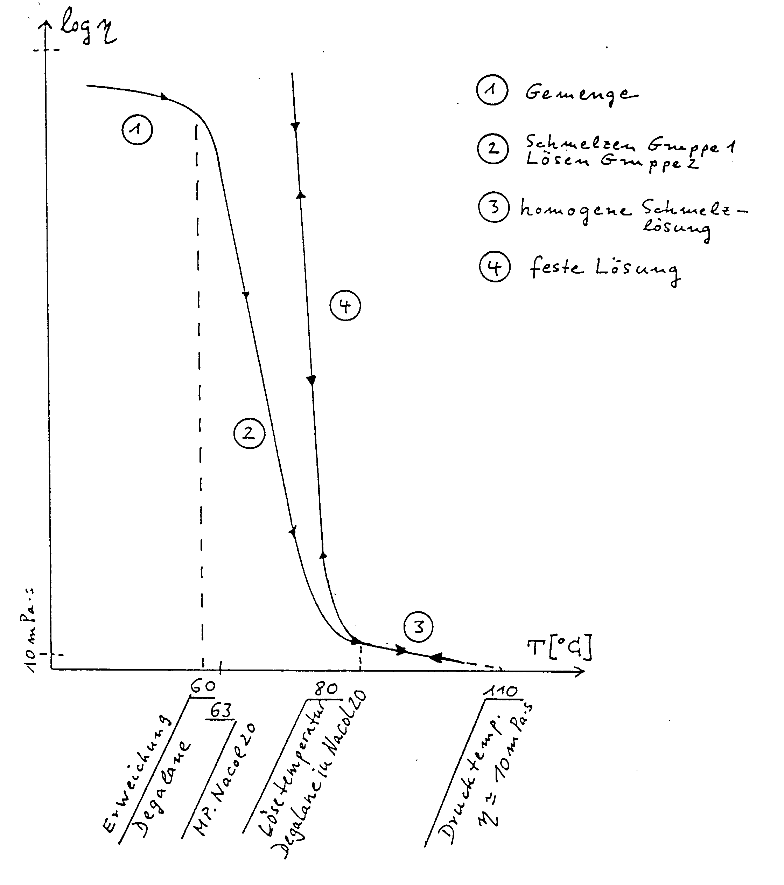

Das bei der Erschmelzung der gattungsgemäßen Heißdruckfarben und bei deren Wiederverfestigung durchlaufene Viskositäts-Temperatur-Diagramm ist schematisch in der beigefügten Abbildung für das Rezepturbeispiel 2 wiedergegeben. Die Hysterese dieses Viskositäts-Temperatur-Zyklusses verdeutlich noch einmal das charakteristische Erstarrungsverhalten der sich bildenden festen Lösung, aus dem sich die diesem neuen Druckfarbensystem eigenen anwendungstechnischen Vorteile wesentlich herleiten.

In der Abbildung ist für ein erfindungsgemäßes Stoffgemisch nach dem Rezepturbeispiel 2 die viskosität η [mPas] über der Temperatur [° C] dargestellt.

Mit einem Bereich 1 ist das Gemenge zwischen der Bindemittelkomponente Degalan der zweiten Komponentengruppe und der Komponente Nacol^{R}20 der ersten Komponentengruppe gezeigt, das, wie durch Pfeile gezeigt, erstmals erwärmt wird. Eine gemeinsame Viskosität ist hier idealisiert dargestellt, da die Erweichung der Degalane bei 60° C und die Verflüssigung von Nacol^{R}20 bei 61° C in inhomogener Phase erfolgen.

Im Bereich 2 ist der steile Viskositätsabfall der Komponente der ersten Gruppe, d. h. Nacol^{R}20, beim Erschmelzen dargestellt. Das Erweichen der Komponenten der zweiten Gruppe (Degalane) setzt sich fort, so daß auch deren Viskosität bei steigender Temperatur deutlich abfällt. Bei einer Temperatur von 80° C ist die Lösetemperatur für Degalane in Nacol^{R}20 erreicht.

Der Bereich 3 gibt die homogene Schmelzlösung beider Komponentengruppen mit äußerst niedriger Viskosität bei weiterhin steigender Temperatur an. Die Temperatur der Schmelzlösung wird bis ca. 110° C erhöht, bei der mit einer Viskosität von 10 mPas eine geeignete Viskosität für den Tiefdruck erreicht ist. Dies ist die Drucktemperatur.

Mit den Bereichen 3 und 4 ist das Abkühlen der Schmelzlösung verdeutlicht, die bei Erreichen der Lösetemperatur in eine neue Phase, nämlich in eine feste Lösung der Komponente der ersten Gruppe (Nacol^{R}20) in den Komponenten der zweiten Gruppe (Degalane) übergeht. Bei nur geringfügigem Temperaturabfall steigt die Viskosität schlagartig an. Dieser Verfestigungsprozeß ist nunmehr reversibel, d. h. innerhalb eines geringen Temperaturbereiches kann die Verflüssigkung und die Verfestigung stattfinden, wobei bei einer Tempertur von über 80° C, die über der Gebrauchstemperatur von Druckerzeugnissen liegt, eine vollständige Verfestigung erfolgt.

Selbstverständlich soll diese Temperatur nach dem Abschluß des Druckvorganges nicht mehr überschritten werden, so daß in der Praxis von der Umkehrbarkeit der Verfestigung und Verflüssigung kein Gebrauch gemacht wird.

## Patentansprüche

1. Druckfarbe für Rotationsdruckverfahren, die in durch Schmelzen fluidisiertem Zustand verdruckbar und durch Wärmeentzug erhärtbar ist und die ein Bindemittel bestehend aus zumindest zwei Komponentengruppen mit jeweils zumindest einem Mitglied umfaßt, in welchem die Mitglieder der ersten Komponentengruppe kristalline Stoffe sind, die Mitglieder der ersten Komponentengruppe Lösungsmittelcharakter für die Mitglieder der zweiten Komponentengruppe haben, die Mitglieder der zweiten Komponentengruppe bei Umgebungstemperatur in festem Zustand vorliegende amorphe Stoffe sind, die in der erschmolzenen ersten Komponentengruppe löslich sind, die Mitglieder der zweiten Komponentengruppe bei Wärmezufuhr bei einer Temperatur oberhalb des Schmelzpunktes der Mitglieder der ersten Komponentengruppe sich in diesen lösen, und die Mitglieder der ersten Komponentengruppe in feste Lösung in den Mitgliedern der zweiten Komponentengruppe übergehen, wenn die Mitglieder der zweiten Komponentengruppe bei Wärmeentzug aus der erschmolzenen Lösung der Mitglieder der ersten und zweiten Komponentengruppe ausfallen,
dadurch gekennzeichnet,
daß zumindest einer aus der nachstehenden Gruppe von Stoffen
- kristalline, bifunktionelle Alkohole, wobei 12-Hydroxystearinsäure ausgenommen ist, wenn hydroxylgruppenreiches Polyacrylat enthalten ist,
- Fettsäuremonoester mehrfunktioneller Alkohole
als Komponente der ersten Komponentengruppe vorgesehen wird.

2. Druckfarbe nach Anspruch 1,
dadurch gekennzeichnet,
daß 1,6-Hexandiol als kristalliner bifunktioneller Alkohol ausgewählt wird.

3. Druckfarbe nach Anspruch 1,
dadurch gekennzeichnet,
daß Glycerinmonostearat als Fettsäuremonoester ausgewählt wird.

4. Druckfarbe für Rotationsdruckverfahren, die in durch Schmelzen fluidisiertem Zustand verdruckbar und durch Wärmeentzug erhärtbar ist, und die ein Bindemittel bestehend aus zumindest zwei Komponentengruppen mit jeweils zumindest einem Mitglied umfaßt, in welchem die Mitglieder der ersten Komponentengruppe kristalline Stoffe sind, die Mitglieder der ersten Komponentengruppe Lösungsmittelcharakter für die Mitglieder der zweiten Komponentengruppe haben, die Mitglieder der zweiten Komponentengruppe bei Umgebungstemperatur in festem Zustand vorliegende amorphe Stoffe sind, die in der erschmolzenen ersten Komponentengruppe löslich sind, die Mitglieder der zweiten Komponentengruppe bei Wärmezufuhr bei einer Temperatur oberhalb des Schmelzpunktes der Mitglieder der ersten Komponentengruppe sich in diesen lösen und die Mitglieder der ersten Komponentengruppe in feste Lösung in den Mitgliedern der zweiten Komponentengruppe übergehen, wenn die Mitglieder der zweiten Komponentengruppe bei Wärmeentzug aus der erschmolzenen Lösung der Mitglieder der ersten und zweiten Komponentengruppe ausfallen,
dadurch gekennzeichnet,
daß zumindest einer aus der nachstehenden Gruppe von Stoffen
- nicht-vernetzende Poly(meth)acrylat-[P(M)A]Copolymerisate
- thermoplastische Polyamide
- thermoplastische Polyester-Polyamid-Copolymere
- thermoplastische Kolophoniumester
- lösliche Polystyrole
als Komponente der zweiten Komponentengruppe vorgesehen wird, wobei Kolophoniumester ausgeschlossen ist, wenn Stearylalkohol eingesetzt wird.

5. Druckfarbe nach Anspruch 4,
dadurch gekennzeichnet,
daß Polyacrylsäure-n-Butylester als Poly(meth)acrylat[P(M)A]Copolymerisate ausgewählt werden.

6. Druckfarbe nach Anspruch 4,
dadurch gekennzeichnet,
daß n-Butylmethacrylat-Copolymere als Poly(meth)acrylat-[P(M)A]Copolymerisate ausgewählt werden.

7. Druckfarbe nach Anspruch 4,
dadurch gekennzeichnet,
daß i-Butylmethacrylat-Copolymere als Poly(meth)acrylat-[P(M)A]Copolymerisate ausgewählt werden.

8. Druckfarbe für Rotationsdruckverfahren, die in durch Schmelzen fluidisiertem Zustand verdruckbar und durch Wärmeentzug erhärtbar ist, und die ein Bindemittel bestehend aus zumindest zwei Komponentengruppen mit jeweils zumindest einem Mitglied umfaßt, in welchem die Mitglieder der ersten Komponentengruppe kristalline Stoffe sind, die Mitglieder der ersten Komponentengruppe Lösungsmittelcharakter für die Mitglieder der zweiten Komponentengruppe haben, die Mitglieder der zweiten Komponentengruppe bei Umgebungstemperatur in festem Zustand vorliegende amorphe Stoffe sind, die in der erschmolzenen ersten Komponentengruppe löslich sind, die Mitglieder der zweiten Komponentengruppe bei Wärmezufuhr bei einer Temperatur oberhalb des Schmelzpunktes der Mitglieder der ersten Komponentengruppe sich in diesen lösen und die Mitglieder der ersten Komponentengruppe in feste Lösung in den Mitgliedern der zweiten Komponentengruppe übergehen, wenn die Mitglieder der zweiten Komponentengruppe bei Wärmeentzug aus der erschmolzenen Lösung der Mitglieder der ersten und zweiten Komponentengruppe ausfallen,
dadurch gekennzeichnet,
daß zumindest einer aus der nachfolgenden Gruppe von Stoffen
- 2,4,7,9,-Tetramethyl-5-decin-4,7-Diol
- Butin-2-Diol 1,4
als additive Komponente einer dritten Komponentengruppe vorgesehen wird, die ebenfalls bei Wärmeentzug mit den Mitgliedern der ersten und zweiten Komponentengruppen in feste Lösung geht.

9. Druckfarbe nach Anspruch 8,
dadurch gekennzeichnet,
daß die additiven Komponenten zu 0,5 - 5 Gew.% in der Gesamtmischung enthalten sind.

10. Druckfarbe nach einem der Ansprüche 1 bis 9,
dadurch gekennzeichnet,
daß 4-Nonylphenol-Polyglycolether als weitere additive Komponente der dritten Komponentengruppe zur Verbesserung der Deinkbarkeit verwendet wird.

11. Druckfarbe nach Anspruch 10,
dadurch gekennzeichnet,
daß Polyester aus Adipinsäure und Butandiol als additive Weichmacher für Acrylatsysteme zur Verbesserung der Zugfestigkeit verwendet werden.

## Claims

1. A printing ink for rotary printing processes, which can be printed in a fluidized state resulting from melting, and cured by removing heat, and comprises a binder consisting of at least two groups of components, each group including at least one member, wherein the members of the first group of components are crystalline substances, the members of the first group of components have solvent properties for the members of the second group of components, the members of the second group of components are amorphous substances present in the solid state at ambient temperature, which are soluble in the melted first group of components, the members of the second group of components dissolve in the members of the first group of components upon supply of heat at a temperature above the melting point of same, and the members of the first group of components are transformed into a solid solution in the members of the second group of components when the members of the second group of components precipitate from the melted solution of the members of the first and second groups of components upon removal of heat,
characterized in that
at least one of the following group of substances
- crystalline, bifunctional alcohols, with 12-hydroxystearic acid being excluded, if polyacrylate high in hydroxy groups is contained;
- fatty acid monoesters of multifunctional alcohols; is provided as component of the first group of components.

2. The ink according to claim 1, characterized in that 1,6-hexanediol is selected as crystalline bifunctional alcohol.

3. The ink according to claim 1, characterized in that glycerol monostearate is selected as fatty acid monoester.

4. A printing ink for rotary printing processes, which can be printed in a fluidized state resulting from melting, and cured by removing heat, and comprises a binder consisting of at least two groups of components, each group including at least one member, wherein the members of the first group of components are crystalline substances, the members of the first group of components have solvent properties for the members of the second group of components, the members of the second group of components are amorphous substances present in the solid state at ambient temperature, which are soluble in the melted first group of components, the members of the second group of components dissolve in the members of the first group of components upon supply of heat at a temperature above the melting point of same, and the members of the first group of components are transformed into a solid solution in the members of the second group of components when the members of the second group of components precipitate from the melted solution of the members of the first and second groups of components upon removal of heat,
characterized in that
at least one of the following group of substances
- non-crosslinking poly(meth)acrylate [P(M)A] copolymers,
- thermoplastic polyamides,
- thermoplastic polyester-polyamide copolymers,
- thermoplastic colophonium esters,
- soluble polystyrenes
is provided as component of the second group of components, colophonium esters being excluded if stearyl alcohol is used.

5. The ink according to claim 4, characterized in that polyacrylic acid n-butyl esters are selected as poly(meth)acrylate [P(M)A] copolymers.

6. The ink according to claim 4, characterized in that n-butyl methacrylate copolymers are selected as poly(meth)acrylate [P(M)A] copolymers.

7. The ink according to claim 4, characterized in that isobutyl methacrylate copolymers are selected as poly(meth)acrylate [P(M)A] copolymers.

8. A printing ink for rotary printing processes, which can be printed in a fluidized state resulting from melting, and cured by removing heat, and comprises a binder consisting of at least two groups of components, each group including at least one member, wherein the members of the first group of components are crystalline substances, the members of the first group of components have solvent properties for the members of the second group of components, the members of the second group of components are amorphous substances present in the solid state at ambient temperature, which are soluble in the melted first group of components, the members of the second group of components dissolve in the members of the first group of components upon supply of heat at a temperature above the melting point of same, and the members of the first group of components are transformed into a solid solution in the members of the second group of components when the members of the second group of components precipitate from the melted solution of the members of the first and second groups of components upon removal of heat,
characterized in that
at least one of the following group of substances
- 2,4,7,9-tetramethyl-5-decyne-4,7-diol
- 2-butyne-1,4-diol
is provided as an additional component of a third group of components which, upon removal of heat, likewise goes into a solid solution with the members of the first and second groups of components.

9. The ink according to claim 8, characterized in that the additional components are contained with 0.5-5 wt.-% in the overall mixture.

10. The ink according to one of claims 1 through 9, characterized in that 4-nonylphenol-polyglycol ether is used as another additional component of the third group of components in order to improve the de-inkability.

11. The ink according to claim 10, characterized in that polyesters of adipic acid and butanediol are used as additional plasticizers for acrylate systems to improve the tensile strength.

## Revendications

1. Encre d'imprimerie pour des procédés d'impression par rotative, qui, en état fluidisé par fusion, est imprimable et peut être durcie par un enlèvement de chaleur et qui contient un liant se composant d'au moins deux groupes de composants avec respectivement au moins un membre, dans lequel les membres du premier groupe de composants sont des matières cristallines, les membres du premier groupe de composants agissent comme solvant pour les membres du deuxième groupe de composants, les membres du deuxième groupe de composants sont des substances amorphes présentes en état solide à la température ambiante, qui sont solubles dans le premier groupe fondu de composants, les membres du deuxième groupe de composants se dissolvent dans les membres du premier groupe de composants lors d'une adduction de chaleur à une température au-dessus du point de fusion desdits membres du premier groupe, et les membres du premier groupe de composants passent en solution solide dans les membres du deuxième groupe de composants, lorsque les membres du deuxième groupe de composants resolidifient, lors d'un enlèvement de chaleur, de la solution fondue des membres des premier et deuxième groupes de composants
**caractérisée par le fait**
que l'on prévoit au moins une des matières du groupe suivant de matières
- alcools cristallins à deux fonctions, l'acide 12-hydroxy-stéarique étant exclu, si du polyacrylate riche en hydroxyles est contenu.
- monoesters de l'acide gras d'alcools à plusieurs fonctions
comme composant du premier groupe de composants.

2. Encre d'imprimerie selon la revendication 1, **caractérisée par le fait** que l'on choisit 1,6-hexanediol comme alcool cristallin à deux fonctions.

3. Encre d'imprimerie selon la revendication 1, **caractérisée par le** fait que l'on choisit du monostéarate de glycérine en tant que monoester de l'acide gras.

4. Encre d'imprimerie pour des procédés d'impression par rotative, qui, en état fluidisé par fusion, est imprimable et peut être durcis par un enlèvement de chaleur et qui contient un liant se composant d'au moins deux groupes de composants avec respectivement au moins un membre, dans lequel les membres du premier groupe de composants sont des matières cristallines, les membres du premier groupe de composants agissent comme solvant pour les membres du deuxième groupe de composants, les membres du deuxième groupe de composants sont des substances amorphes présentes en état solide à la température ambiante, qui sont solubles dans le premier groupe fondu de composants, les membres du deuxième groupe de composants se dissolvent dans les membres du premier groupe de composants lors d'une adduction de chaleur à une température au-dessus du point de fusion desdits membres du premier groupe, et les membres du premier groupe de composants passent en solution solide dans les membres du deuxième groupe de composants, lorsque les membres du deuxième groupe de composants resolidifient, lors d'un enlèvement de chaleur, de la solution fondue des membres des premier et deuxième groupes de composants
**caractérisée par le fait**
que l'on prévoit au moins une des matières du groupe suivant de matières
- copolymères [P(M)A] non réticulants de poly(meth)acrylate
- polyamides thermoplastiques
- copolymères thermoplastiques de polyester-polyamide
- esters thermoplastiques de colophane
- polystyrols solubles
comme composant du deuxième groupe de composants, ester de colophane étant exclu, si l'on utilise de l'acool de stéaryle.

5. Encre d'imprimerie selon la revendication 4, **caractérisée par le fait** que l'on choisit des n-esters butyliques de l'acide polyacrylique en tant que copolymères [P(M)A] de poly(meth)acrylate.

6. Encre d'imprimerie selon la revendication 4, **caractérisée par le fait** que l'on choisit des copolymères de n-butylméthacrylate en tant que copolymères [P(M)A] de poly(meth)acrylate.

7. Encre d'imprimerie selon la revendication 4, **caractérisée par le fait** que l'on choisit des copolymères de i-butylméthacrylate en tant que copolymères [P(M)A] de poly(meth)acrylate.

8. Encre d'imprimerie pour des procédés d'impression par rotative, qui, en état fluidisé par fusion, est imprimable et peut être durcie par un enlèvement de chaleur et qui contient un liant se composant d'au moins deux groupes de composants avec respectivement au moins un membre, dans lequel les membres du premier groupe de composants sont des matières cristallines, les membres du premier groupe de composants agissent comme solvant pour les membres du deuxième groupe de composants, les membres du deuxième groupe de composants sont des substances amorphes présentes en état solide à la température ambiante, qui sont solubles dans le premier groupe fondu de composants, les membres du deuxième groupe de composants se dissolvent dans les membres du premier groupe de composants lors d'une adduction de chaleur à une température au-dessus du point de fusion desdits membres du premier groupe, et les membres du premier groupe de composants passent en solution solide dans les membres du deuxième groupe de composants, lorsque les membres du deuxième groupe de composants resolidifient, lors d'un enlèvement de chaleur, de la solution fondue des membres des premier et deuxième groupes de composants
**caractérisée par le fait**
que l'on prévoit au moins une des matières du groupe suivant de matières
- 2,4,7,9-tétramétllyl-5-décine-4,7-diol
- butine-2-diol 1,4
comme composant additif d'un troisième groupe de composants, qui, lors d'un enlèvement de chaleur, entre lui aussi en solution solide avec les membres des premier et deuxième groupes de composants.

9. Encre d'imprimerie selon la revendication 8, **caractérisée par le fait** que les composants additifs sont contenus à 0,5 - 5% en poids dans le mélange total.

10. Encre d'imprimerie selon l'une des revendications 1 à 9, **caractérisée par le fait** que l'on utilise du polyglycoléther 4-nonylphénol comme autre composant additif du troisième groupe de composants pour l'amélioration de la capacité de désencrage.

11. Encre d'imprimerie selon la revendication 10, **caractérisée par le** fait que des polyesters d'acide adipique et butanediol sont utilisés en tant qu'agents additifs de ramollissement pour des systèmes d'acrylate pour l'amélioration de la résistance à la traction.
